(19) Europäisches Patentamt / European Patent Office / Office européen des brevets

(11) **EP 3 748 552 A1**

(12) **EUROPEAN PATENT APPLICATION**

(43) Date of publication:
**09.12.2020 Bulletin 2020/50**

(51) Int Cl.:
***G06N 5/00*** *(2006.01)*

(21) Application number: **20174843.1**

(22) Date of filing: **14.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.05.2019 JP 2019098606**

(71) Applicant: **FUJITSU LIMITED**
**Kanagawa 211-8588 (JP)**

(72) Inventor: **TOMITA, Yoshinori**
**Kawasaki-shi, Kanagawa 211-8588 (JP)**

(74) Representative: **Haseltine Lake Kempner LLP**
**138 Cheapside**
**London EC2V 6BJ (GB)**

(54) **OPTIMIZATION APPARATUS, OPTIMIZATION METHOD, AND OPTIMIZATION PROGRAM**

(57)     An optimization apparatus, includes a searching unit that computes a provisional optimum solution of a combinatorial optimization problem by searching a ground state for an Ising model acquired by converting the combinatorial optimization problem; an executing unit that executes a simulation using the provisional optimum solution, evaluates a result of the simulation based on an evaluation criterion value representing an evaluation criterion for the result of the simulation, and, when the result satisfies the evaluation criterion, outputs the provisional optimum solution as an optimum solution; and an updating unit that, when the result does not satisfy the evaluation criterion, generates an updated Ising model acquired by adding a first constraint term based on the result to the Ising model and causes the searching unit to execute a search for a ground state for the updated Ising model.

FIG. 2

**Description**

FIELD

The embodiments discussed herein are related to an optimization apparatus, an optimization method, and a recording medium.

BACKGROUND

As a method for modeling the real world, there is a method that causes a simulator to execute many trials (simulations) by giving the simulator combinations of values of various input parameters. In this method, a combination of values of input parameters with which the best result is acquired among simulation results from many trials is determined as an optimum solution. As an example of the method, a method using software in a genre called process integration and design optimization (PIDO) has been known. However, in a case where a complex combinatorial optimization problem existing in the real world is attempted to be solved by using the method as described above, a certain amount of time is taken for one trial. As a result, it is difficult to acquire a solution close to an optimum solution in a practical amount of time.

As a method for acquiring a solution close to an optimum solution of a combinatorial optimization problem in a practical amount of time, a simulated annealing method and Markov chain Monte Carlo methods such as a replica exchange method (also called "exchange Monte Carlo method") have been known, for example. A method applying quantum annealing has also been known. According to these methods, a combinatorial optimization problem is calculated by replacing the problem with an Ising model which is a model representing a behavior of a spin of a magnetic body. By performing simulated annealing by using a digital circuit as hardware that solves a combinatorial optimization problem by applying the Ising model, a combination of values of state variables resulting in a minimum value of an Ising type evaluation function may be calculated. The similar calculation may be performed by performing quantum annealing by using a superconducting circuit.

As a simulation method that optimizes a physical distribution in the past, physical distribution parameters are optimized in a range of a constraint to suppress an increase of a simulation time.

A method has been proposed that applies simulated annealing for optimizing cargo handling in consideration of a constraint condition.

As Related art, for example, Japanese Laid-open Patent Publication No. 2002-269192, and Japanese Laid-open Patent Publication No. 11-199059 are disclosed.

SUMMARY

[TECHNICAL PROBLEM]

There are an enormous number of parameters when a complex combinatorial optimization problem existing in the real world is formulated faithfully with an Ising model. For example, when a problem (dynamic problem) considering a time lapse is formulated with an Ising model, the number of parameters markedly increases to express the time series, compared with a case where the time series is not expressed. Accordingly, a dynamic problem that is difficult to solve because of hardware constraints by a method in the past applying an Ising model may be calculated by converting the dynamic problem to a statistic problem. However, a solution that is highly precise (or close to an optimum solution) may not be acquired.

It is desirable to provide an optimization apparatus, an optimization method and an optimization program that may improve the precision of a solution of a combinatorial optimization problem.

[SOLUTION TO PROBLEM]

According to an embodiment of an aspect, an optimization apparatus, includes a searching unit that computes a provisional optimum solution of a combinatorial optimization problem by searching a ground state for an Ising model acquired by converting the combinatorial optimization problem; an executing unit that executes a simulation using the provisional optimum solution, evaluates a result of the simulation based on an evaluation criterion value representing an evaluation criterion for the result of the simulation, and, when the result satisfies the evaluation criterion, outputs the provisional optimum solution as an optimum solution; and an updating unit that, when the result does not satisfy the evaluation criterion, generates an updated Ising model acquired by adding a first constraint term based on the result to the Ising model and causes the searching unit to execute a search for a ground state for the updated Ising model.

[ADVANTAGEOUS EFFECTS OF INVENTION]

According to an embodiment of an aspect, the precision of a solution of a combinatorial optimization problem may be improved

BRIEF DESCRIPTION OF DRAWINGS

FIG. 1 is a diagram illustrating an example of an optimization apparatus according to a first embodiment;
FIG. 2 is a flowchart illustrating a flow of an example of an optimization method according to the first embodiment;
FIG. 3 is a diagram illustrating a hardware example of an optimization apparatus according to a second embodiment;
FIG. 4 is a diagram illustrating another hardware example of the optimization apparatus according to the second embodiment;
FIG. 5 is a block diagram illustrating a function example of the optimization apparatus according to the second embodiment;
FIG. 6 is a diagram explaining a work example within a distribution center;
FIG. 7 is a diagram illustrating an example of routes of a forklift when a certain truck places loads in a certain receiving staging area;
FIG. 8 is a diagram illustrating an example of routes of a forklift when a certain truck places loads in another receiving staging area;
FIG. 9 is a diagram explaining a constraint condition of a problem;
FIG. 10 is a flowchart illustrating a flow of an example of processing by the optimization apparatus according to the second embodiment;
FIG. 11 is a diagram explaining a third constraint condition;
FIG. 12 is a flowchart illustrating a flow of an example of a simulation;
FIG. 13 is a diagram illustrating an example in which a waiting time occurs;
FIG. 14 is a diagram illustrating another example in which a waiting time occurs; and
FIG. 15 is a diagram illustrating an example in which observation results of increased times in a simulation are compiled as a frequency distribution.

DESCRIPTION OF EMBODIMENTS

Embodiments of the present disclosure will be described below, by way of example only, with reference to the drawings.

(First Embodiment)

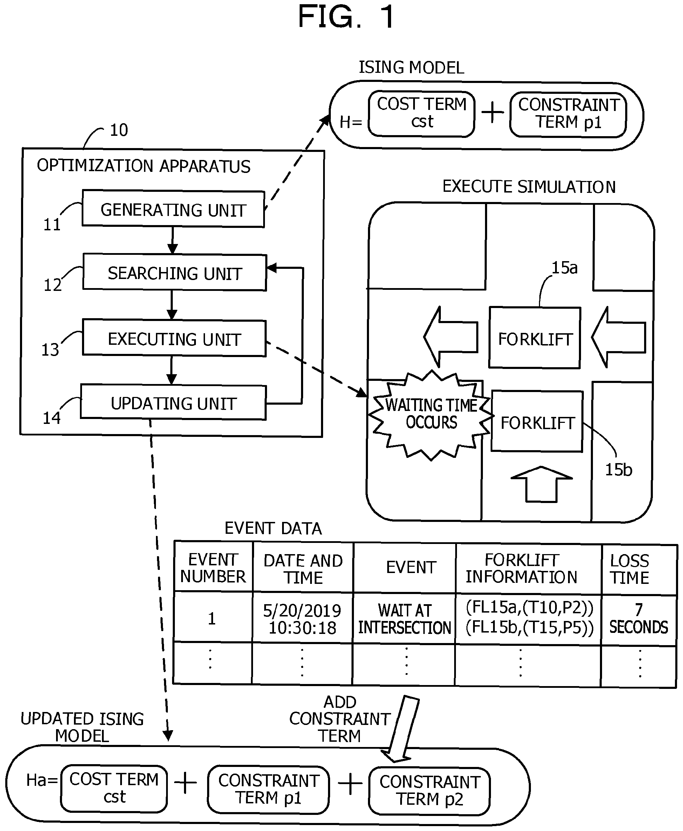

FIG. 1 is a diagram illustrating an example of an optimization apparatus according to a first embodiment.
An optimization apparatus 10 according to the first embodiment includes a generating unit 11, a searching unit 12, an executing unit 13, and an updating unit 14.
The generating unit 11 generates an Ising model based on problem data of a combinatorial optimization problem to be calculated (or converts a combinatorial optimization problem to an Ising model). The Ising model is expressed by an Ising type evaluation function (also called an "objective function"). The Ising type evaluation function may be expressed by a quadric that is used for solving a problem, which is called quadratic unconstrained binary optimization (QUBO).
As an example of a combinatorial optimization problem to be calculated, there is a problem for determining to which of a plurality of receiving staging areas each of a plurality of receiving service trucks (hereinafter, each simply called a "truck") are allocated (or stopped) in order to minimize the working times in a distribution center. The combinatorial optimization problem to be calculated is not limited to this example, but embodiments are applicable to various combinatorial optimization problems such as a problem that optimizes the traffic amount to suppress occurrence of congestion of vehicles.
The evaluation function may be expressed by H = cost term cst + constraint term p1 as illustrated in FIG. 1, for example. The cost term cst is a value to be minimized, and, for example, a total movement distance of a forklift may be the cost term cst, where the forklift transports a load from each of a plurality of receiving staging areas to one of a plurality of shipping staging areas within a distribution center. This is because, as the total movement distance decreases, the working time decreases. The constraint term p1 expresses a constraint condition to be satisfied by a combinatorial optimization problem and has a large value if the constraint condition is not satisfied. For example, in a problem relating to a distribution center, there is a constraint condition that a truck having arrived at the distribution center enters one receiving staging area. When there is a plurality of constraint conditions, a plurality of the constraint terms p1 is included in the evaluation function. In problems relating to a distribution center, there may be another constraint condition that, if the stopping times of a plurality of trucks overlap, the plurality of trucks is not allowed to enter the same receiving staging area.

The optimization apparatus 10 may obtain an Ising model generated by an external apparatus and store it in a storage unit, not illustrated. In this case, the generating unit 11 may not be provided.

The searching unit 12 searches for a ground state with respect to the Ising model to compute a provisional optimum solution for a combinatorial optimization problem. The searching unit 12 may perform the search for a ground state by simulated annealing or Markov chain Monte Carlo methods such as a replica exchange method or may perform the search for a ground state by quantum annealing. A state (a combination of values of all state variables of the evaluation function) that is a provisional optimum solution output as a search result is a state (not limited to a ground state) with which the value of the evaluation function is minimum among states updated many times within a predetermined time, for example. In the example of a problem relating to a distribution center, the provisional optimum solution is how a plurality of trucks is to be allocated to a plurality of receiving staging areas, where the value of the evaluation function H with a total movement distance of a forklift as the cost term cst is minimum. In this case, each of the state variables is a binary variable indicating whether a truck enters a receiving staging area or not.

In some kinds of combinatorial optimization problem, there are two kinds of constraint conditions corresponding to the constraint term p1, including an indispensable constraint condition that is to be satisfied without fail and an arbitrary constraint condition that is to be satisfied if possible. A provisional optimum solution that does not satisfy the indispensable constraint condition means a solution that is not executable in reality. In the example of the distribution center, a state that two trucks, for example, enter the same receiving staging area at a certain instance does not satisfy the indispensable constraint condition. For this kind of combinatorial optimization problem, a provisional optimum solution that does not satisfy the indispensable constraint condition is rejected, and searches are repeated until a solution that satisfies the indispensable constraint condition is obtained.

The executing unit 13 executes a simulation by using the provisional optimum solution computed by the searching unit 12 and evaluates a simulation result based on an evaluation criterion value indicating an evaluation criterion for a simulation result. If a simulation result satisfies the evaluation criterion, the executing unit 13 outputs the provisional optimum solution as an optimum solution. First, the executing unit 13 generates simulation input data reflecting the provisional optimum solution and executes a simulation based on the input data.

For example, in a problem relating to the distribution center, as illustrated in FIG. 1, the working time up to transportation of all loads placed in the receiving staging areas by a plurality of trucks to a plurality of shipping staging areas by forklifts is simulated. In this case, for example, there is a possibility of occurrence of a situation that a forklift 15b has to wait (or reduce its speed) until a forklift 15a passes by as illustrated in FIG. 1. In the simulation, when such a situation occurs, the waiting time of the forklift 15b is also counted as the working time.

The simulation result includes numerical value data of a target (optimization target) to be actually optimized and, for example, is a working time for load transportation within the distribution center in the problem relating to the distribution center. In this case, if the working time acquired as a simulation result is shorter than a predetermined time that is an externally given evaluation criterion value, the executing unit 13 determines that the working time satisfies the evaluation criterion and outputs the provisional optimum solution as an optimum solution.

The optimization target may not agree with a target indicated by the cost term cst. For example, while the cost term cst is a total movement distance of a forklift as described above, the optimization target is a working time.

The "optimum solution" above represents a provisional optimum solution (search result by the searching unit 12) when a simulation result satisfies the evaluation criterion for the first time and may not agree with an optimum solution in a strict sense.

When the simulation result does not satisfy the evaluation criterion, the updating unit 14 generates an updated Ising model acquired by adding a constraint term (which is categorized into the arbitrary constraint condition as described above) based on the simulation result to the Ising model and causes the searching unit 12 to execute a search for a ground state for the updated Ising model. The constraint term is generated based on numerical value data (hereinafter, called "event data") recording an event observed during execution of the simulation. FIG. 1 illustrates an example of the event data in the problem relating to the distribution center. The event data include, for example, an event number, the date and time, event details, forklift information and a loss time. The event with an event number = 1 indicates that the forklift 15b transporting a load placed in the receiving staging area P3 by the truck T15 waits for 7 seconds until the forklift 15a transporting a load placed in the receiving staging area P2 by the truck T10 passes by an intersection.

For a combination of values of state variables with which an element (such as a waiting time) worsening a solution occurs, an arbitrary constraint term is generated such that the evaluation function has a large value. FIG. 1 illustrates an example in which a constraint term p2 is added to the evaluation function Ha representing the updated Ising model.

The generating unit 11, the searching unit 12, the executing unit 13 and the updating unit 14 may be implemented by using program modules executed by a processor such as a central processing unit (CPU) or a digital signal processor (DSP). The searching unit 12 may be dedicated hardware that executes simulated annealing or a replica exchange method by using a digital circuit or may be dedicated hardware that performs quantum annealing.

An example of operations of the optimization apparatus 10 (optimization method) according to the first embodiment will be described below.

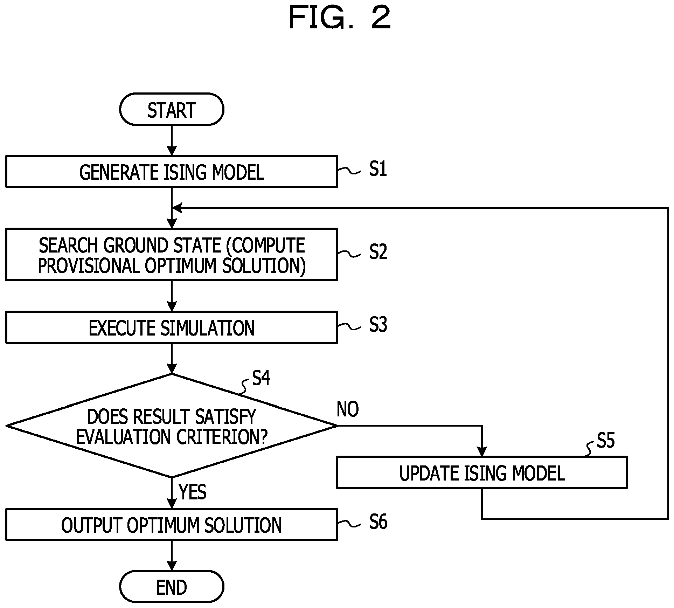

FIG. 2 is a flowchart illustrating a flow of an example of an optimization method according to the first embodiment.

The generating unit 11 generates an Ising model based on problem data of a combinatorial optimization problem to be calculated (step S1), and the searching unit 12 computes a provisional optimum solution for the combinatorial optimization problem by searching a ground state for the Ising model (step S2).

After that, the executing unit 13 executes a simulation by using the provisional optimum solution computed by the searching unit 12 (step S3) and determines whether the simulation result satisfies an evaluation criterion or not based on an evaluation criterion value (step S4).

If the simulation result does not satisfy the evaluation criterion, the updating unit 14 generates an updated Ising model (or updates the Ising model) by adding a constraint term to the Ising model (step S5). After the processing in step S5, the processing from step S2 is repeated by using the generated updated Ising model.

If the simulation result satisfies the evaluation criterion, the executing unit 13 outputs the provisional optimum solution as an optimum solution (step S6). Then, the operations of the optimization apparatus 10 end.

In this manner, the optimization apparatus 10 performs a simulation by using a provisional optimum solution for a combinatorial optimization problem converted to an Ising model, updates the Ising model by adding a constraint term based on the result and repeats a search for a provisional optimum solution. Thus, the Ising model reflects a characteristic (such as a dynamic characteristic) of an actual combinatorial optimization problem, and the precision of the solution may be improved.

Because an Ising model is used for calculations, the number of times of execution of a simulation may be reduced compared with a case where an optimum solution is searched only by performing simulations. Therefore, an optimum solution or a solution close to an optimum solution may be acquired in a short period of time.

(Second Embodiment)

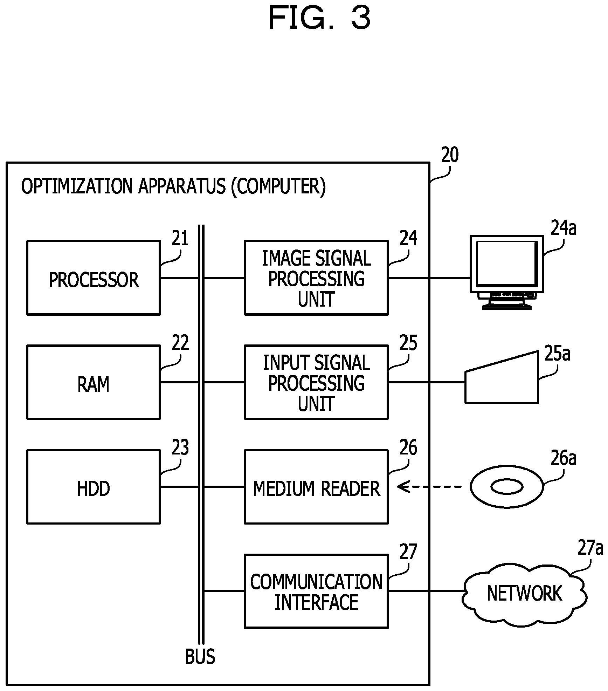

FIG. 3 is a diagram illustrating a hardware example of an optimization apparatus according to a second embodiment.

An optimization apparatus 20 according to the second embodiment is a computer, for example, and includes a CPU 21, a random-access memory (RAM) 22, a hard disk drive (HDD) 23, an image signal processing unit 24, an input signal processing unit 25, a medium reader 26, and a communication interface 27. The above units are coupled to a bus.

The CPU 21 is a processor including an arithmetic circuit that executes program instructions. The CPU 21 loads at least a part of a program and data stored in the HDD 23 into the RAM 22 and executes the program. The CPU 21 may include a plurality of processor cores, the optimization apparatus 20 may include a plurality of processors, and the processes, which will be described below, may be executed in parallel using a plurality of processors or processor cores. A set of the plurality of processors (multiprocessor) may be referred to as a "processor".

The RAM 22 is a volatile semiconductor memory that temporarily stores a program executed by the CPU 21 and data used for computation by the CPU 21. The optimization apparatus 20 may include a type of memory other than the RAM, and may include a plurality of memories.

The HDD 23 is a non-volatile storage device that stores software programs such as an operating system (OS), middleware and application software, and data. The programs include an optimization program that calculates a combinatorial optimization problem, for example. The optimization apparatus 20 may include other types of storage devices such as a flash memory and a solid state drive (SSD), and may include a plurality of non-volatile storage devices.

The image signal processing unit 24 outputs an image to a display 24a coupled to the optimization apparatus 20 in accordance with an instruction from the CPU 21. As the display 24a, a cathode ray tube (CRT) display, a liquid crystal display (LCD), a plasma display panel (PDP), an organic EL (organic electro-luminescence: OEL) display, or the like may be used.

The input signal processing unit 25 acquires an input signal from an input device 25a coupled to the optimization apparatus 20 and outputs the input signal to the CPU 21. As the input device 25a, a pointing device such as a mouse, a touch panel, or a trackball, a keyboard, a remote controller, a button switch and the like may be used. A plurality of types of input devices may be coupled to the optimization apparatus 20.

The medium reader 26 is a reading device that reads a program or data recorded on a recording medium 26a. As the recording medium 26a, for example, a magnetic disk, an optical disk, a magneto-optical disk (MO), a semiconductor memory and the like may be used. The magnetic disk includes a flexible disk (FD) and an HDD. The optical disk includes a compact disc (CD) and a digital versatile disc (DVD).

The medium reader 26 copies a program or data read from the recording medium 26a to another recording medium such as the RAM 22 or the HDD 23, for example. The read program is executed by the CPU 21, for example. The recording medium 26a may be a portable recording medium or may be used to distribute the program or data. The recording medium 26a and the HDD 23 may be referred to as computer-readable recording media.

The communication interface 27 is coupled to a network 27a and communicates with another information processing apparatus via the network 27a. The communication interface 27 may be a wired communication interface coupled to a communication device such as a switch via a cable, or may be a wireless communication interface coupled to a base station via a wireless link.

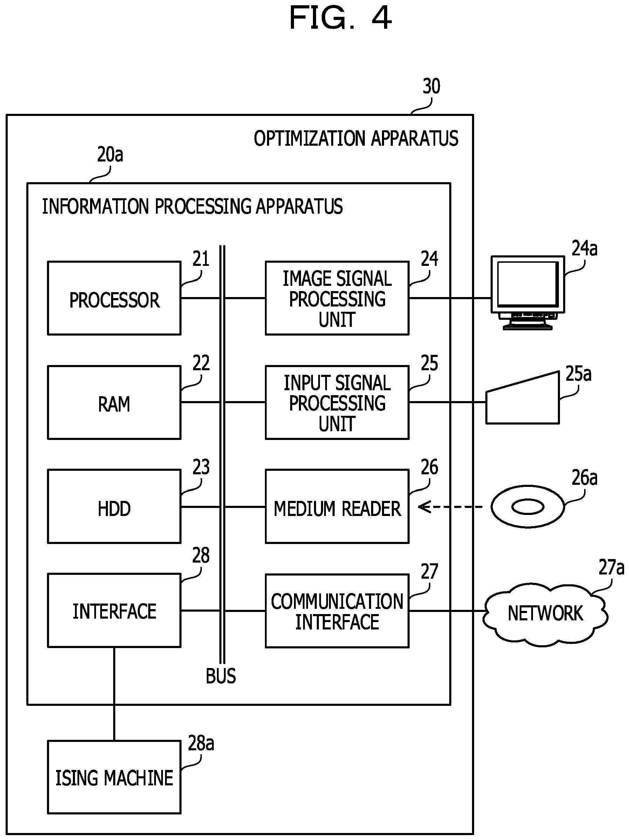

FIG. 4 is a diagram illustrating another hardware example of the optimization apparatus according to the second embodiment. In FIG. 4, the same elements as those illustrated in FIG. 3 are labeled with the same references.

An optimization apparatus 30 includes an information processing apparatus 20a and an Ising machine 28a. The information processing apparatus 20a has an interface 28. The interface 28 is coupled to the Ising machine 28a and exchanges data between the CPU 21 and the Ising machine 28a. The interface 28 may be a wired communication interface such as a Peripheral Component Interconnect (PCI) or may be a wireless communication interface.

The Ising machine 28a may be dedicated hardware that executes simulated annealing or a replica exchange method by using a digital circuit or may be dedicated hardware that performs quantum annealing.

Next, functions and processing procedures of the optimization apparatuses 20 and 30 will be described.

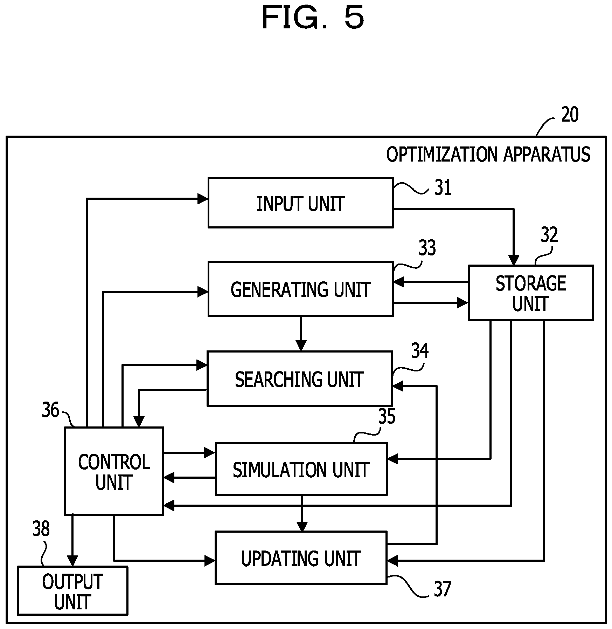

FIG. 5 is a block diagram illustrating a function example of the optimization apparatus according to the second embodiment.

Although a function example of the optimization apparatus 20 illustrated in FIG. 3 will be described below, the optimization apparatus 30 illustrated in FIG. 4 also have the same functions.

The optimization apparatus 20 includes an input unit 31, a storage unit 32, a generating unit 33, a searching unit 34, a simulation unit 35, a control unit 36, an updating unit 37 and an output unit 38. The input unit 31, the generating unit 33, the searching unit 34, the simulation unit 35, the control unit 36, the updating unit 37 and the output unit 38 may be implemented by program modules executed by the CPU 21, for example. When the optimization apparatus 30 illustrated in FIG. 4 is used, the Ising machine 28a functions as the searching unit 34 (or a part thereof). The storage unit 32 may be implemented by using a storage area secured in the RAM 22 or the HDD 23, for example.

The input unit 31 obtains data (input data) input by the input device 25a, for example. The input data include problem data to be used for generating an Ising model, data to be used for executing a simulation, and an evaluation criterion value representing an evaluation criterion for a simulation result. The input data obtained by the input unit 31 are stored in the storage unit 32.

The storage unit 32 stores the input data. The storage unit 32 may store a provisional optimum solution acquired by the searching unit 34 and a simulation result acquired by the simulation unit 35.

The generating unit 33 generates an Ising model based on input data stored in the storage unit 32. Hereinafter, it is assumed that the Ising model is represented by a quadric for QUBO. Information on the generated Ising model is stored in the storage unit 32.

The searching unit 34 receives the information on the Ising model from the generating unit 33 (or the storage unit 32) and searches a ground state for the Ising model to compute a provisional optimum solution of a combinatorial optimization problem. The searching unit 34 may perform the search for a ground state by simulated annealing or Markov chain Monte Carlo methods such as a replica exchange method or may perform the search for a ground state by quantum annealing.

The simulation unit 35 executes a simulation by using the provisional optimum solution computed by the searching unit 34 and outputs a simulation result. The simulation unit 35 executes a simulation based on input data for a simulation generated based on the provisional optimum solution by the control unit 36 and other input data for a simulation stored in the storage unit 32. The simulation result includes event data recording an event observed during execution of the simulation in addition to numerical value data to be optimized.

The control unit 36 controls the units in the optimization apparatus 20, generates input data for a simulation based on the provisional optimum solution computed by the searching unit 34 and supplies the input data to the simulation unit 35. The control unit 36 evaluates the simulation result output by the simulation unit 35 based on the evaluation criterion value stored in the storage unit 32. If the simulation result satisfies the evaluation criterion, the control unit 36 causes the output unit 38 to output the provisional optimum solution as an optimum solution. In this manner, in the function example of the optimization apparatus 20 of the second embodiment illustrated in FIG. 5, the function of the executing unit 13 in the optimization apparatus 10 of the first embodiment is implemented by the simulation unit 35, the control unit 36 and the output unit 38.

If the simulation result does not satisfy the evaluation criterion, the control unit 36 causes the updating unit 37 to update the Ising model.

If the simulation result does not satisfy the evaluation criterion, the updating unit 37 generates a constraint term to be added to the Ising model based on the event data included in the simulation result. The updating unit 37 updates the Ising model by adding the generated constraint term to the current Ising model based on the information on the current Ising model stored in the storage unit 32. The updating unit 37 supplies the information on the updated Ising model to the searching unit 34 and causes the searching unit 34 to search a ground state for the updated Ising model.

The output unit 38 outputs the provisional optimum solution as an optimum solution when the simulation result satisfies the evaluation criterion value to the display 24a, for example, and causes the display 24a to display it. The output unit 38 may store the optimum solution in the storage unit 32.

Next, an example of the operations of the optimization apparatus 20 and 30 (optimization method) according to the second embodiment will be described.

As an example of a combinatorial optimization problem to be calculated, a problem for determining to which of a plurality of receiving staging areas a plurality of vehicles are allocated will be described, for example, in order to minimize the working times within a certain facility to which loads are transported. In the facility, it is assumed that there is a work for moving a load by a mobile unit.

Hereinafter, the facility to which loads are transported is called a "distribution center", the vehicle that transports loads is called a "truck", and the mobile unit that moves the loads is called a "forklift". However, embodiments are not limited thereto. For example, the mobile unit may be a human.

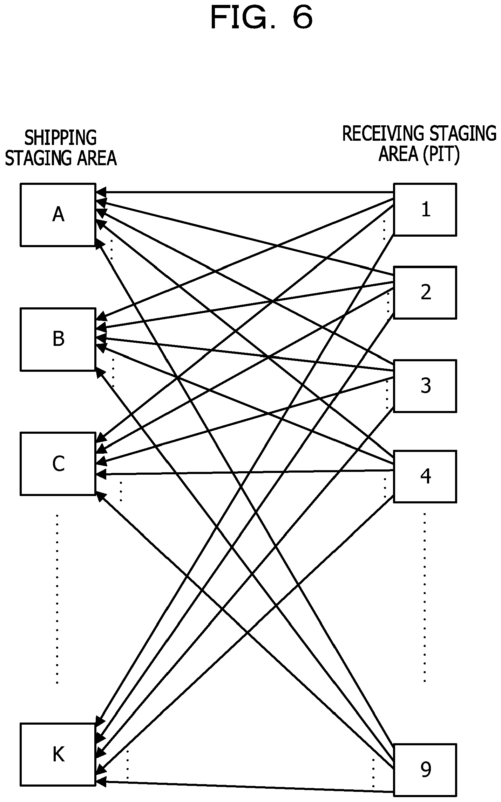

FIG. 6 is a diagram explaining a work example within the distribution center.

Each of a plurality of trucks places loads (receiving loads) in one of a plurality of receiving staging areas (9 areas of 1 to 9 in the example in FIG. 6). A place where a truck arrives and departs is called a "pit". Assuming that the pits and the receiving staging areas correspond in one-to-one manner, a receiving staging area is identified by a pit number (one of 1 to 9 in the example in FIG. 6).

A shipping staging area destination (one of A to K in the example in FIG. 6) corresponding to the actual destination of a load is allocated to each load, for example. A human or a transporting apparatus (hereinafter, "forklift") takes out one load from a receiving staging area and moves it to the shipping staging area corresponding to the destination. This work is repeated if there are loads in each of the receiving staging areas.

It is assumed that the time when a truck arrives, the time the truck departs, and the number and destination of loads to be transported are predetermined for each truck. It is assumed that there is a shipping service truck that arrives at a predetermined time and takes out loads from a shipping staging area. In this case, the shipping service truck arrives at a different pit from that for a receiving service truck, and receiving and shipping do not interfere with each other.

For this problem, the Ising model generated by the generating unit 33 is a quadric for QUBO including the total movement distance of a forklift as a cost term. Among combinations of trucks and receiving staging areas where the unloading of trucks is performed, a combination with a minimum value of a quadric for QUBO corresponds to the ground state for the Ising model.

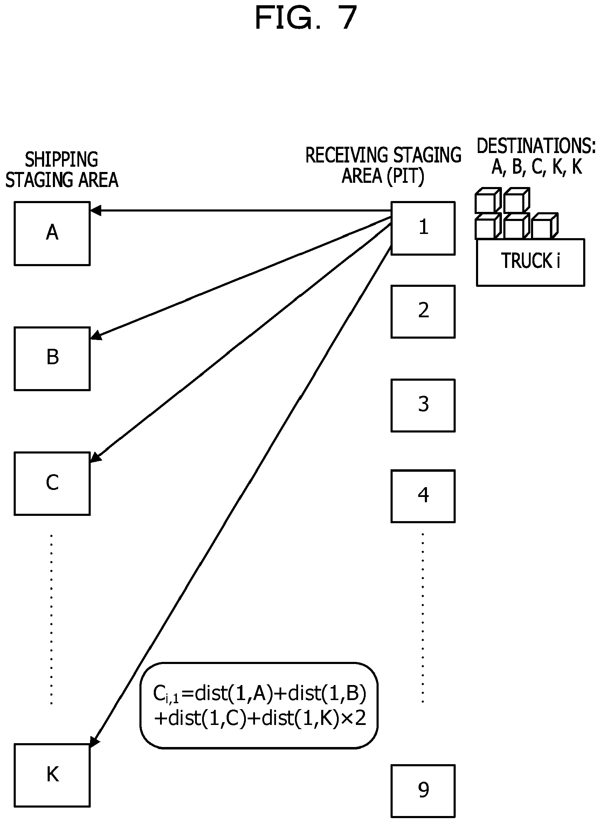

FIG. 7 is a diagram illustrating an example of routes of a forklift when a certain truck places loads in a certain receiving staging area. Although the routes are illustrated as straight lines, routes are not limited to straight lines.

In the example of FIG. 7, a truck with a truck number = i ("truck i" in FIG. 7 (the same is true in the subsequent figures)) has placed five loads at a receiving staging area with a pit number = 1. The destinations of the five loads are A, B, C, K, and K. A total of movement distances of the forklift may be expressed as $C_{i,1}$ = dist(1,A) + dist(1,B) + dist(1,C) + dist(1,K) $\times$ 2. dist(1,A) represents a movement distance of the forklift transporting a load from a receiving staging area with a pit number = 1 to a shipping staging area corresponding to the destination = A. dist(1,B) represents a movement distance of the forklift transporting a load from a receiving staging area with a pit number = 1 to a shipping staging area corresponding to the destination = B. dist(1,C) represents a movement distance of the forklift transporting a load from a receiving staging area with a pit number = 1 to a shipping staging area corresponding to the destination = C. dist(1,K) represents a movement distance of the forklift transporting a load from a receiving staging area with a pit number = 1 to a shipping staging area corresponding to the destination = K.

These movement distances between receiving staging areas and shipping staging areas corresponding to destinations are included in the input data and are stored in the storage unit 32. $C_{i,1}$ above indicates a weight coefficient included in the information on the Ising model generated by the generating unit 33.

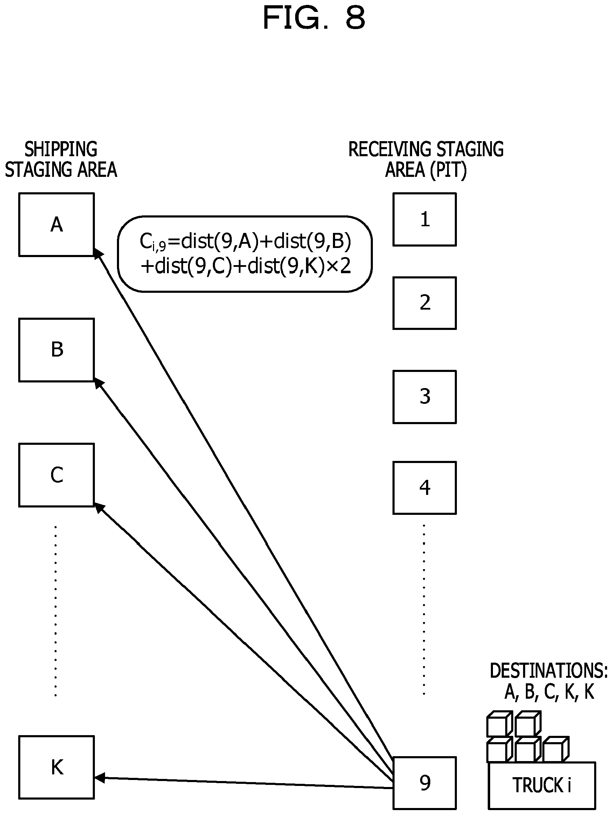

FIG. 8 is a diagram illustrating an example of routes of a forklift when a certain truck places loads in another receiving staging area.

In the example of FIG. 8, the truck with the truck number = i has placed five loads for the same destinations as those of the example in FIG. 7 at a receiving staging area with a pit number = 9. A total of movement distances of the forklift may be expressed as $C_{i,9}$ = dist(9,A) + dist(9,B) + dist(9,C) + dist(9,K) $\times$ 2. If $C_{i,9} < C_{i,1}$, placing loads at the receiving staging area with the pit number = 9 by the truck with the truck number = i results in a shorter total movement distance than placing loads at the receiving staging area with the pit number = 1. Therefore, there is a high possibility that the working time may be reduced.

However, in reality, waiting times occur because of interference among a plurality of forklifts, and there is a possibility that the working time is increased. These points are verified by performing a simulation. In accordance with the simulation result, a constraint term corresponding to a higher value of the quadric for QUBO is added to the Ising model for a combination of allocations of trucks and pits causing large waiting times, and the search by the searching unit 34 is repeated.

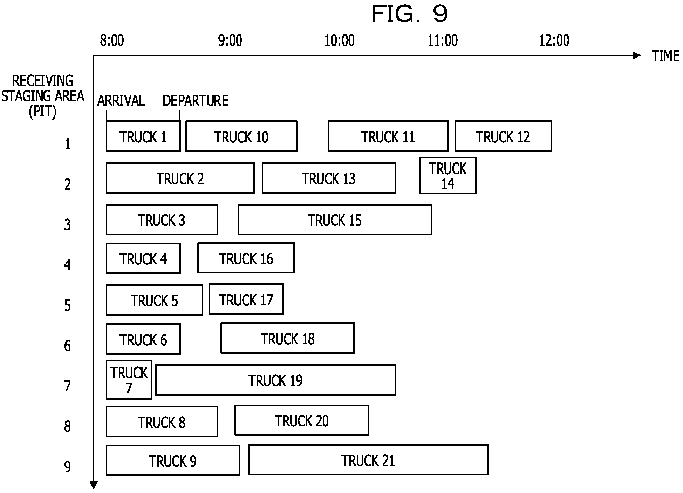

FIG. 9 is a diagram explaining a constraint condition of a problem.

FIG. 9 illustrates an allocation example of trucks to the pits (receiving staging areas). FIG. 9 has a horizontal axis indicating time and a vertical axis indicating pit number.

As described above, the times when trucks arrive at the distribution center and the times when the trucks depart therefrom are predetermined. This problem includes the following constraint conditions. The first constraint condition is that a truck having arrived at the distribution center enters one pit without fail. The second constraint condition is that two trucks whose stopping times are overlapping do not simultaneously enter one pit. For example. as illustrated in FIG. 9, when a truck with a truck number = 1 exists at the receiving staging area (pit) with the pit number = 1, other trucks whose stopping time is overlapping with the stopping time of the truck may not enter the pit. In the example in FIG. 9, after the truck with the truck number = 1 departs, a truck with a truck number = 10 enters the receiving staging area with the pit number = 1.

In a case where the searching unit 34 optimizes within a time slot in a predetermined time in consideration of the computable number of bits, the following constraint condition is added. In other words, for example, the constraint condition is that, to a pit having a truck from an immediately previous time slot to a time slot to be processed, a truck whose stopping time is overlapping therewith is not allowed to enter.

A flow of processing of the optimization apparatuses 20 and 30 for the problem as described above will be described.

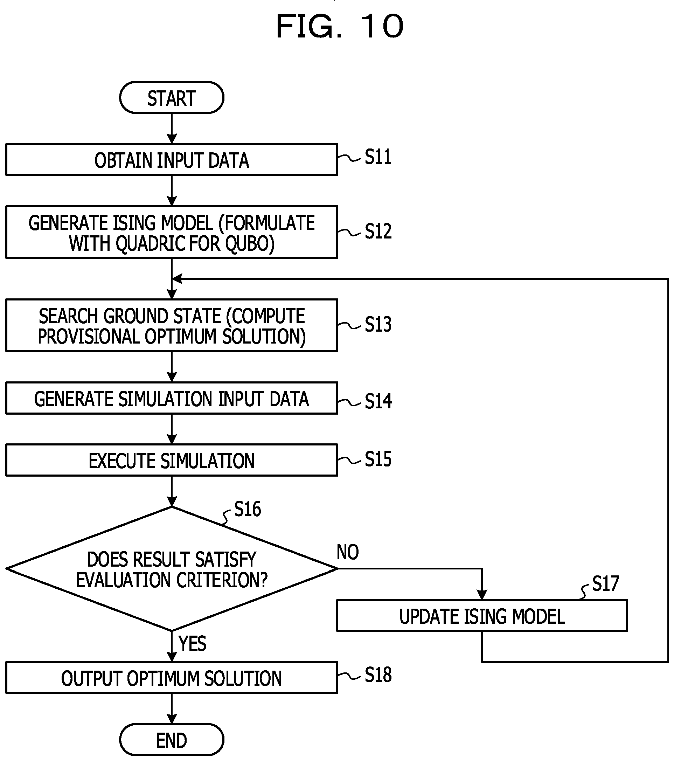

FIG. 10 is a flowchart illustrating a flow of an example of processing by the optimization apparatus according to the second embodiment.

First, the input unit 31 obtains input data (step S11). The input data obtained by the input unit 31 are stored in the storage unit 32. The input data include data for generating an Ising model. The data for generating an Ising model include information regarding arrival times and departure times of trucks, the number of loads transported by each of the trucks and the destinations of the loads, and movement distances between receiving staging areas and shipping staging areas for the destinations. The data for generating an Ising model further include information regarding constraint conditions and information regarding the number of bits computable by the searching unit 34. The input data include, as data to be used for executing a simulation, the number of forklifts, the standard speed of the forklifts, map information describing routes of the forklifts from the receiving staging areas to the shipping staging area for the destinations and so on. The standard speed represents an average speed of a forklift freely driving within the distribution center in a case where there is not interference between forklifts. The input data further include a working time that may be regarded as being optimum as an evaluation criterion value representing an evaluation criterion for a simulation result.

After that, the generating unit 33 generates an Ising model based on the input data (step S12). The Ising model is formulated by a quadric for QUBO.

A state variable included in the quadric for QUBO may be represented by $x_{i,p}$. i is a truck number, and p is a pit number. $x_{i,p} = 1$ expresses that a truck with a truck number = i enters a receiving staging area with a pit number = p. $x_{i,p} = 0$ expresses that the truck with the truck number = i does not enter the receiving staging area with the pit number = p. The number of state variables included in the quadric is equal to (the number of trucks) $\times$ (the number of receiving staging areas, i.e. the number of pits).

For example, it is assumed that, in a distribution center, n (such as several hundreds) trucks arrive per day and that each of the trucks enters one of 23 (9 in the example in FIG. 7) pits. In this case, the number of combinations regarding at which receiving staging area each of the trucks unloads is equal to $23^n$. When the number of bits computable by the searching unit 34 (corresponding to the number of state variables) is 1024 bits, for example, the searching unit 34 may not compute by one operation if the number of trucks is several hundreds.

However, each of the trucks stops in the distribution center for approximately 10 to 50 minutes, all of n trucks may not be considered for the one operation. For example, when the problem may be solved by dividing 24 hours into time slots of 2 hours each, the solution may not be so bad. When the number of receiving staging areas is equal to 23 and the number of computable bits is equal to 1024 bits, 1024/23 = 44.5 .... Therefore, the time slots may be adjusted such that the number of trucks is equal to or lower than 44 trucks.

Hereinafter, it is assumed that the generating unit 33 sorts trucks by a first key being the time order starting with the earliest arrival at the distribution center and a second key being the time order starting with the earliest departure, extracts the number of trucks that fits into the number of bits computable by the searching unit 34 and allocates truck numbers to the extracted trucks for formulation.

The quadric for QUBO may be expressed by the following Expression (1).

$$E(x) = \sum_i \sum_p (C_{i,p} \cdot x_{i,p}) + \alpha \sum_i \left( \left( \sum_p x_{i,p} - 1 \right) \right)^2$$
$$+ \beta \sum_p \left( \sum_{i,j} (x_{i,p} \cdot x_{j,p}) \right) + \gamma \sum_{p \in Remain} \left( \sum_{i,p} x_{i,p} \right) \qquad (1)$$

In Expression (1), the first term on the right side is a cost term representing a total movement distance of a forklift. $C_{i,p}$ is a weight coefficient as described above and represents a total of movement distances of the forklift in a case where a truck with a truck number = i places loads at a receiving staging area with a pit number = p.

The second term on the right side is a constraint term corresponding to the constraint condition that a truck having arrived at the distribution center enters one pit without fail. For example, when the truck with the truck number = i does not enter any pit (when there is not pit number = p satisfying $x_{i,p}$ = 1), the constraint term has a value larger than 0.

The third term on the right side is a constraint term corresponding to the constraint condition that two trucks whose stopping times are overlapping do not enter one pit. i and j in the third term represent truck numbers of two trucks whose stopping times are overlapping. For example, when two trucks with the truck numbers = i, j enter a pit with the same pit number = p (or $x_{i,p}$ = $x_{j,p}$ = 1), the constraint term has a value larger than 0.

The fourth term on the right side is a constraint term corresponding to the constraint condition that, to a pit having a truck from an immediately previous time slot to a time slot to be processed, a truck whose stopping time is overlapping is not allowed to enter.

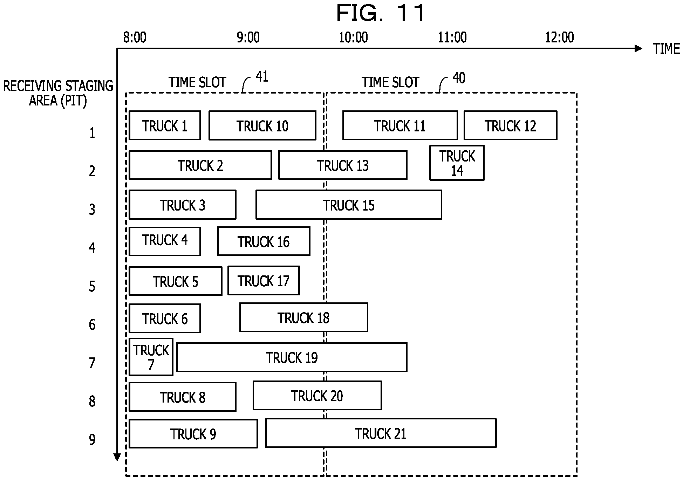

FIG. 11 is a diagram explaining the third term of constraint condition.

For example, FIG. 11 is acquired by adding time slots 40 and 41 to FIG. 9. The time slots 40 and 41 are determined such that the number of state variables of the quadric for QUBO is within the number of bits computable by the searching unit 34. In the time slot 40, when the allocation of pits where trucks enter is to be determined, the target trucks are trucks with truck numbers = 11, 12, 14. Through the processing in the immediately previous time slot 41, the pit allocation is determined for the trucks with truck numbers = 13, 15, 18, 19, 20, 21.

For example, because the truck with the truck number = 11 stops at a time overlapping with the stopping times of the trucks with the truck numbers 13, 15, 18, 19, 20, and 21, the truck with the truck number = 11 is not allowed to enter the pits with the pit numbers = 2, 3, 6, 7, 8, 9 at which the trucks with the truck numbers 13, 15, 18, 19, 20, and 21 stop. Because the stopping time of the truck with the truck number = 12 only overlaps with the stopping time of the truck with the truck number = 21, the truck with the truck = 12 is allowed to enter a pit other than the pit with the pit number = 9.

In the fourth term on the right side of Expression (1), "Remain" is a set of pit numbers of pits to which trucks are allocated by the processing at the immediately previous time slot, where the occupying times of the trucks are overlapping with the stopping time of the truck with the truck number = i. In the example in FIG. 11, "Remain" for the truck number = 11 is pit numbers = 2, 3, 6, 7, 8, 9, and "Remain" for the truck number = 12 is a pit number = 9.

In the example in FIG. 11, when $x_{12,9}$ = 1, for example, the constraint term is larger than 0.

In Expression (1), $\alpha$, $\beta$, $\gamma$ are coefficients of the constraint terms and are included in the input data, and larger values are set therefor.

After the formulating as described above, the searching unit 34 searches a ground state for the formulated Ising model to compute a provisional optimum solution for a combinatorial optimization problem (step S13).

When the function of the searching unit 34 is implemented by the Ising machine 28a that performs simulated annealing by using a digital circuit, processing as follows is performed, for example. The Ising machine 28a calculates an energy change (change of E(x) of Expression (1)) caused by changes of the state variables due to a change of a certain state variable if any. The Ising machine 28a compares between a threshold value generated based on a temperature parameter and a random number value and an energy change caused by the changes of the state variables. Based on the comparison result, the Ising machine 28a determines a state variable to be changed for selecting by priority a state transition causing an energy change leading small E(x). The Ising machine 28a repeats the processing many times by gradually reducing the value of the temperature parameter to search a ground state.

In step S13, whether the provisional optimum solution satisfies the indispensable constraint conditions is checked. The indispensable constraint conditions correspond to the second, third, and fourth terms in Expression (1). If values of the state variables in the provisional optimum solution are substituted for the terms and the value is not 0, it is determined that the indispensable constraint conditions are not satisfied. When the provisional optimum solution does not satisfy the indispensable constraint conditions, the search for a ground state is continued. The search is repeated until another provisional optimum solution that satisfies the indispensable constraint conditions is found. An upper limit of the number of the repetitions may be set. When the number of the repetitions exceeds the upper limit, the processing may be terminated with error. As a cause for difficulty of satisfaction of the indispensable constraint conditions, there is a possibility that α, β, γ in Expression (1) given as inputs have improper values.

After the processing in step S13, the control unit 36 generates input data for a simulation based on the provisional optimum solution computed by the searching unit 34 (step S14). For example, the control unit 36 generates input data in which loads of trucks are associated with the receiving staging areas based on the state variables having a value of 1 in the provisional optimum solution.

For example, when $x_{i,1} = 1$, the control unit 36 associates five loads of the truck with the truck number = i with the receiving staging area with the pit number = 1 as in the example illustrated in FIG. 7. When $x_{i,9} = 1$, the control unit 36 associates five loads of the truck with the truck number = i with the receiving staging area with the pit number = 9 as in the example illustrated in FIG. 8.

After the processing in step S14, the simulation unit 35 performs a simulation based on the input data generated by the control unit 36 and other input data (such as the number of forklifts, the standard speed and map information) stored in the storage unit 32 (step S15).

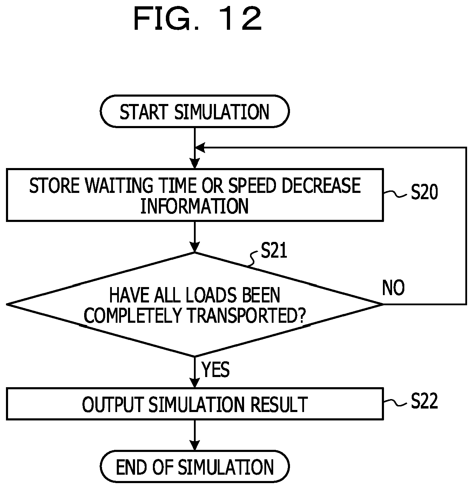

FIG. 12 is a flowchart illustrating a flow of an example of a simulation.

For a simulation, a plurality of forklifts may be provided, and each of the forklifts is given a role for transporting loads from a receiving staging area to a shipping staging area. Each of the forklifts autonomously operates. Each of the forklifts is obliged to comply with driving rules. The driving rules include rules to observe the speed limit, to temporarily stop, to drive only in a driving-permitted area, to control the speed to avoid a contact with another forklift and to allow one forklift to enter a receiving/shipping staging area, for example. A simulation may be performed by iteratively calculating operations and positions of the forklifts by a program for each minute time such as 0.1 seconds.

When a simulation starts, every time an interference by a plurality of forklifts occurs, the simulation unit 35 causes the storage unit 32, for example, to store information regarding a waiting time or a speed decrease along with a set of state variables causing the interference (step S20). The simulation unit 35 determines whether all loads have completely been transported from the receiving staging areas to the shipping staging areas (step S21). If all loads have not completely been transported from the receiving staging areas to the shipping staging areas, the processing from step S20 is repeated. If all of loads have completely been transported from the receiving staging areas to the shipping staging areas, the simulation unit 35 outputs a simulation result including the working time and the recorded waiting time and speed decrease information (step S22) and ends the simulation. The simulation may be performed under a plurality of simulation conditions based on the input data generated based on one provisional optimum solution. The plurality of simulation conditions may be generated by increasing or reducing the number of forklifts, for example.

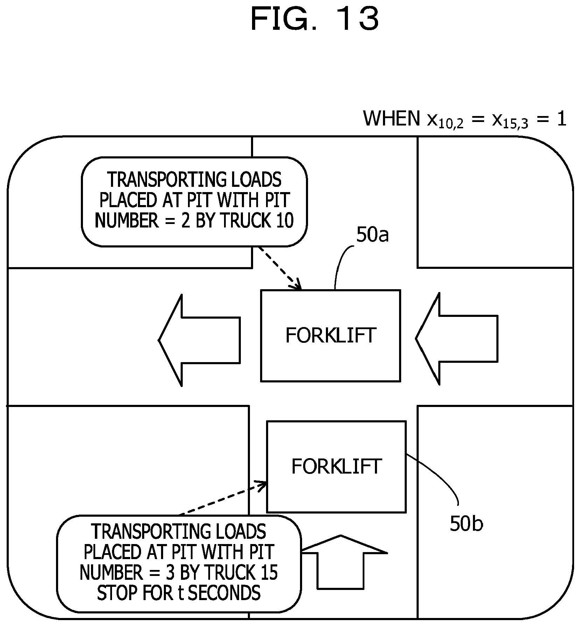

FIG. 13 is a diagram illustrating an example in which a waiting time occurs.

For example, for $x_{10,2} = x_{15,3} = 1$ included in a provisional optimum solution, there is a forklift 50a that transports a load placed at the pit with the pit number = 2 by the truck with the truck number = 10. There is also a forklift 50b that transports a load placed at the pit with the pit number = 3 by the truck with the truck number = 15. In the example in FIG. 13, because the forklift 50a blocks the route of the forklift 50b at an intersection, the forklift 50b stops until the forklift 50a passes by the intersection. The simulation unit 35 associates the waiting time then (t seconds in the illustrated example) and $x_{10,2}$, $x_{15,3}$ and stores them in the storage unit 32, for example.

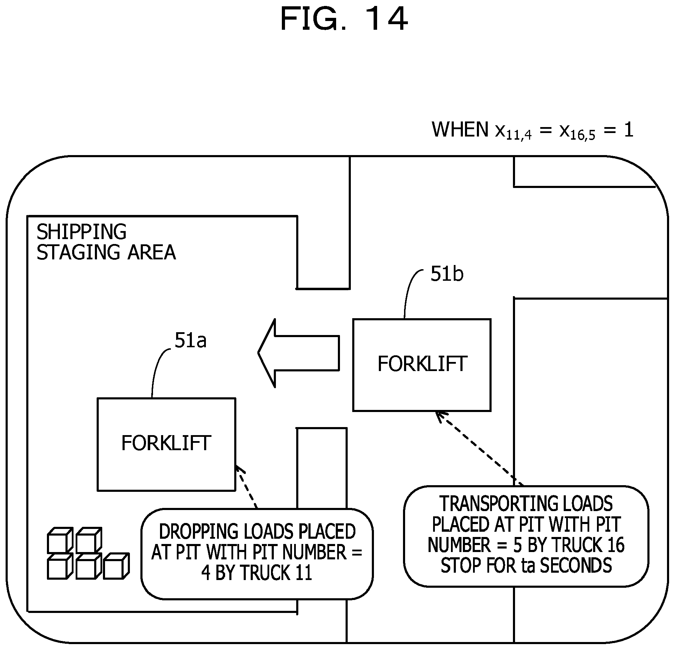

FIG. 14 is a diagram illustrating another example in which a waiting time occurs.

For example, for $x_{11,4} = x_{16,5} = 1$ included in a provisional optimum solution, there is a forklift 51a that transports a load placed at the pit with the pit number = 4 by the truck with the truck number = 11. There is also a forklift 51b that transports a load placed at the pit with the pit number = 5 by the truck with the truck number = 16. In the example in FIG. 14, in a case where, while the forklift 51a is unloading at a shipping staging area, the forklift 51b to enter the same shipping staging area comes, the forklift 51b stops until the forklift 51a exits from the shipping staging area. The simulation unit 35 associates the waiting time then (ta seconds in the illustrated example) and $x_{11,4}$, $x_{16,5}$ and stores them in the storage unit 32, for example.

After the execution of the simulation as described above ends, the control unit 36 determines whether the simulation result satisfies an evaluation criterion or not based on an evaluation criterion value stored in the storage unit 32 (step S16). For example, the control unit 36 determines that the simulation result satisfies the evaluation criterion if the working time included in the simulation result is shorter than a working time being the evaluation criterion.

If the simulation result does not satisfy the evaluation criterion, the updating unit 37 updates the Ising model (step S17).

The evaluation criterion value may be properly changed. For example, the working time in the simulation result does not satisfy the evaluation criterion (or is higher than the evaluation criterion value) even after a predetermined number of updates of the Ising model are performed, the control unit 36 may display a message that prompts to increase the evaluation criterion value on the display 24a. In a case where the working time in the simulation result satisfies the evaluation criterion through a lower number of updates, there is a possibility that there is a solution for a shorter working time. Therefore, the control unit 36 may display a message that prompts to reduce the evaluation criterion value on the display 24a.

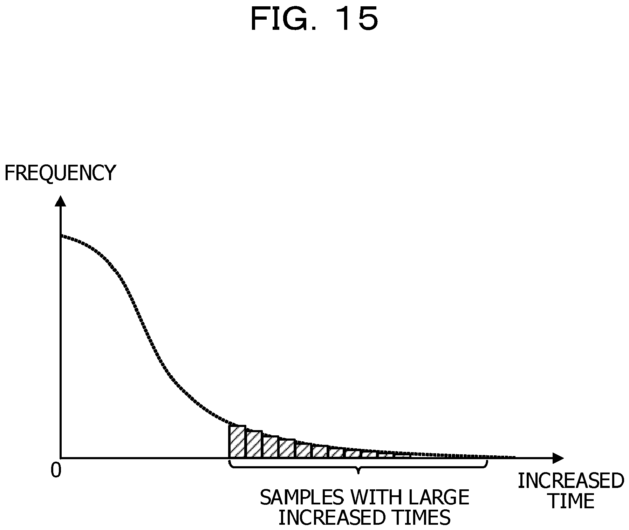

FIG. 15 is a diagram illustrating an example in which observation results of increased times in a simulation are compiled as a frequency distribution. FIG. 15 has a horizontal axis indicating an increased time ([working time acquired by a simulation] - [working time without waiting time or the like] when forklifts interfere with each other once) and a vertical axis indicating frequency (the number of times of observation of the increased time). The interference between forklifts is a state as illustrated in FIG. 13 or FIG. 14 and every time the state occurs, it is counted as one sample.

For example, the updating unit 37 extracts, from the storage unit 32, a pair of information on a waiting time or a speed decrease and a state variable causing the waiting time or speed decrease in a sample having a large increased time in FIG. 15. The updating unit 37 converts the information regarding a waiting time or a speed decrease to a value of a dimension of distance, generates a new constraint term by using the pair of the extracted state variables, and adds the new constraint term to the quadric expressed in Expression (1) so that the Ising model is updated. In the example illustrated in FIG. 13, when $x_{10,2} = x_{15,3} = 1$, the waiting time t occurs. Therefore, $x_{10,2} \times x_{15,3} \times t \times$ (standard speed) is added as a constraint term to the quadric. The same is true in a case where a speed decrease occurs. A constraint term is generated based on a product of a decreased speed and a time when the forklift drives at the speed. The constraint term to be added here refers to a phenomenon (interference of the forklifts) that is desirably avoided as much as possible and corresponds to an arbitrary constraint condition rather than an indispensable constraint condition. In the constraint term, a value considering a weight like $\alpha, \beta, \gamma$ in Expression (1) may be used instead of the standard speed.

After the processing in step S17, the updated Ising model is used to repeat the processing from step S13.

If it is determined in step S16 that the simulation result satisfies the evaluation criterion, the output unit 38 outputs the provisional optimum solution at that point in time as an optimum solution (step S18). Then, the optimization processing ends.

Because the Ising model updated by the processing in step S17 reflects a dynamic characteristic of the problem verified by the simulations, the new provisional optimum solution acquired by the searching unit 34 is a solution reflecting the dynamic characteristic of the problem. By repeating the processing as described above, the Ising model may reflect the actual combinatorial optimization problem, and the precision of the solution may be improved.

Having described above the problem relating to a distribution center as an example, the embodiments are also applicable to other problems without limiting to the problem described above.

As described above, the above processing details may be realized by causing the optimization apparatus 20 or 30 to execute a program (optimization program).

The program may be recorded on a computer-readable recording medium (such as the recording medium 26a). As the recording medium, such as a magnetic disk, an optical disk, a magneto-optical disk, and a semiconductor memory may be used. The magnetic disk includes an FD and an HDD. The optical disk includes a CD, a CD-recordable (R)/rewritable (RW), a DVD, and a DVD-R/RW. The program may be recorded and distributed on a portable recording medium. In that case, the program may be copied from the portable recording medium to another recording medium (such as the HDD 23) and executed.

As described above, although one aspect of an optimization apparatus, an optimization method and an optimization program according to the present disclosure has been described based on the embodiments, such an aspect is a mere example and not limited to the above description.

**Claims**

1. An optimization apparatus, comprising:

   a searching unit configured to compute a provisional optimum solution of a combinatorial optimization problem by searching a ground state for an Ising model acquired by converting the combinatorial optimization problem;
   an executing unit configured to execute a simulation using the provisional optimum solution, evaluate a result of the simulation based on an evaluation criterion value representing an evaluation criterion for the result of the simulation, and, when the result satisfies the evaluation criterion, output the provisional optimum solution as an optimum solution; and
   an updating unit configured to, when the result does not satisfy the evaluation criterion, generate an updated Ising model acquired by adding a first constraint term based on the result to the Ising model and cause the searching unit to execute a search for a ground state for the updated Ising model.

2. The optimization apparatus according to claim 1, wherein
   the first constraint term is generated based on numerical value data recording an event having been observed during the execution of the simulation, the numerical value data being included in the result.

3. The optimization apparatus according to claim 1 or 2, further comprising

a generating unit configured to, based on input problem data and a number of bits computable by the searching unit, generate the Ising model using state variables the number of which is within the number of bits.

4. The optimization apparatus according to any preceding claim,

wherein

the combinatorial optimization problem is a problem for determining, in a facility to which a plurality of loads is transported, to which one of receiving staging areas each of a plurality of vehicles transporting the plurality of loads are to be allocated,

the searching unit is configured to search a ground state for the Ising model expressed by a cost term representing a total movement distance of a plurality of mobile units moving the plurality of loads in the facility, which is caused by allocating each of the plurality of vehicles to one of the plurality of receiving staging areas and a second constraint term representing a constraint condition of the problem, and

when working times of the plurality of mobile units included in the result satisfy the evaluation criterion, the executing unit is configured to output the provisional optimum solution as the optimum solution.

5. An optimization method executed by a computer, the optimization method comprising:

computing a provisional optimum solution of a combinatorial optimization problem by searching a ground state for an Ising model acquired by converting the combinatorial optimization problem;

executing a simulation using the provisional optimum solution;

evaluating a result of the simulation based on an evaluation criterion value representing an evaluation criterion for the result of the simulation;

when the result satisfies the evaluation criterion, outputting the provisional optimum solution as an optimum solution; and

when the result does not satisfy the evaluation criterion, generating an updated Ising model acquired by adding a first constraint term based on the result to the Ising model and executing a search for a ground state for the updated Ising model.

6. The optimization method according to claim 5, wherein

the first constraint term is generated based on numerical value data recording an event having been observed during the execution of the simulation, the numerical value data being included in the result.

7. The optimization method according to claim 5 or 6, the optimization method further comprising:

generating the Ising model using state variables the number of which is within the number of bits, based on input problem data and a number of bits computable.

8. The optimization method according to any of claims 5 to 7, wherein the combinatorial optimization problem is a problem for determining, in a facility to which a plurality of loads is transported, to which one of receiving staging areas each of a plurality of vehicles transporting the plurality of loads are to be allocated,

the executing a search process including searching a ground state for the Ising model expressed by a cost term representing a total movement distance of a plurality of mobile units moving the plurality of loads in the facility, which is caused by allocating each of the plurality of vehicles to one of the plurality of receiving staging areas and a second constraint term representing a constraint condition of the problem, and

when working times of the plurality of mobile units included in the result satisfy the evaluation criterion, the executing process including, in the result satisfy the evaluation criterion, outputting the provisional optimum solution as the optimum solution.

9. An optimization program for causing a computer to execute processing comprising:

executing a simulation using the provisional optimum solution;

evaluating a result of the simulation based on an evaluation criterion value representing an evaluation criterion for the result of the simulation;

when the result satisfies the evaluation criterion, outputting the provisional optimum solution as an optimum solution; and

when the result does not satisfy the evaluation criterion, generating an updated Ising model acquired by adding a first constraint term based on the result to the Ising model and executing a search for a ground state for the updated Ising model.

**10.** The optimization program according to claim 9, wherein
the first constraint term is generated based on numerical value data recording an event having been observed during the execution of the simulation, the numerical value data being included in the result.

**11.** The optimization program according to claim 9 or 10, for causing the computer to execute processing comprising generate the Ising model using state variables the number of which is within the number of bits, based on input problem data and a number of bits computable.

**12.** The optimization program according to any of claims 9 to 11, wherein
the combinatorial optimization problem is a problem for determining, in a facility to which a plurality of loads is transported, to which one of receiving staging areas each of a plurality of vehicles transporting the plurality of loads are to be allocated,
the executing a search process including searching a ground state for the Ising model expressed by a cost term representing a total movement distance of a plurality of mobile units moving the plurality of loads in the facility, which is caused by allocating each of the plurality of vehicles to one of the plurality of receiving staging areas and a second constraint term representing a constraint condition of the problem, and
when working times of the plurality of mobile units included in the result satisfy the evaluation criterion, the executing process including, in the result satisfy the evaluation criterion, outputting the provisional optimum solution as the optimum solution.

# FIG. 1

ISING MODEL

$$H = \boxed{\text{COST TERM } cst} + \boxed{\begin{array}{c}\text{CONSTRAINT} \\ \text{TERM } p1\end{array}}$$

**OPTIMIZATION APPARATUS** 10

| GENERATING UNIT | 11 |
| SEARCHING UNIT | 12 |
| EXECUTING UNIT | 13 |
| UPDATING UNIT | 14 |

EXECUTE SIMULATION

15a

FORKLIFT

WAITING TIME OCCURS

FORKLIFT

15b

EVENT DATA

| EVENT NUMBER | DATE AND TIME | EVENT | FORKLIFT INFORMATION | LOSS TIME |
|---|---|---|---|---|
| 1 | 5/20/2019 10:30:18 | WAIT AT INTERSECTION | (FL15a,(T10,P2)) (FL15b,(T15,P5)) | 7 SECONDS |
| ⋮ | ⋮ | ⋮ | ⋮ | ⋮ |

ADD CONSTRAINT TERM

UPDATED ISING MODEL

$$Ha = \boxed{\text{COST TERM } cst} + \boxed{\begin{array}{c}\text{CONSTRAINT} \\ \text{TERM } p1\end{array}} + \boxed{\begin{array}{c}\text{CONSTRAINT} \\ \text{TERM } p2\end{array}}$$

# FIG. 2

```
                    ( START )
                        │
                        ▼
        ┌──────────────────────────────┐
        │     GENERATE ISING MODEL      │─── S1
        └──────────────────────────────┘
                        │
                        ▼
        ┌──────────────────────────────┐
        │  SEARCH GROUND STATE (COMPUTE │─── S2
        │  PROVISIONAL OPTIMUM SOLUTION) │
        └──────────────────────────────┘
                        │
                        ▼
        ┌──────────────────────────────┐
        │      EXECUTE SIMULATION        │─── S3
        └──────────────────────────────┘
                        │
                        ▼     S4
              ◇────────────────◇        NO
             <  DOES RESULT SATISFY  >──────────┐
              <  EVALUATION CRITERION? >          │
              ◇────────────────◇                 ▼
                        │ YES          ┌──────────────────────┐
                        ▼              │   UPDATE ISING MODEL  │─── S5
        ┌──────────────────────────┐   └──────────────────────┘
        │  OUTPUT OPTIMUM SOLUTION  │─── S6
        └──────────────────────────┘
                        │
                        ▼
                    ( END )
```

# FIG. 3

20

OPTIMIZATION APPARATUS (COMPUTER)

| PROCESSOR | 21 |

| IMAGE SIGNAL PROCESSING UNIT | 24 |

24a

| RAM | 22 |

| INPUT SIGNAL PROCESSING UNIT | 25 |

25a

| HDD | 23 |

| MEDIUM READER | 26 |

26a

| COMMUNICATION INTERFACE | 27 |

27a

NETWORK

BUS

# FIG. 4

30

## OPTIMIZATION APPARATUS

20a

### INFORMATION PROCESSING APPARATUS

| PROCESSOR | 21 |
|---|---|

| IMAGE SIGNAL PROCESSING UNIT | 24 |
|---|---|

24a

| RAM | 22 |
|---|---|

| INPUT SIGNAL PROCESSING UNIT | 25 |
|---|---|

25a

| HDD | 23 |
|---|---|

| MEDIUM READER | 26 |
|---|---|

26a

| INTERFACE | 28 |
|---|---|

| COMMUNICATION INTERFACE | 27 |
|---|---|

27a

NETWORK

BUS

| ISING MACHINE | 28a |
|---|---|

# FIG. 5

Block diagram: OPTIMIZATION APPARATUS (20) containing INPUT UNIT (31), GENERATING UNIT (33), STORAGE UNIT (32), SEARCHING UNIT (34), SIMULATION UNIT (35), CONTROL UNIT (36), UPDATING UNIT (37), OUTPUT UNIT (38).

# FIG. 6

# FIG. 7

SHIPPING
STAGING AREA

RECEIVING STAGING
AREA (PIT)

DESTINATIONS:
A, B, C, K, K

TRUCK i

A

B

C

K

1

2

3

4

9

$$C_{i,1}=dist(1,A)+dist(1,B)+dist(1,C)+dist(1,K)\times2$$

# FIG. 8

SHIPPING
STAGING AREA

RECEIVING STAGING
AREA (PIT)

A

$C_{i,9}=dist(9,A)+dist(9,B)$
$+dist(9,C)+dist(9,K)×2$

1

2

B

3

C

4

DESTINATIONS:
A, B, C, K, K

K

9

TRUCK i

# FIG. 9

# FIG. 10

```
                    START
                      │
                      ▼
        ┌──────────────────────────┐
        │   OBTAIN INPUT DATA       │──S11
        └──────────────────────────┘
                      │
                      ▼
        ┌──────────────────────────┐
        │ GENERATE ISING MODEL      │──S12
        │ (FORMULATE WITH QUADRIC   │
        │  FOR QUBO)                │
        └──────────────────────────┘
                      │
                      ▼
        ┌──────────────────────────┐
        │ SEARCH GROUND STATE       │──S13
        │ (COMPUTE PROVISIONAL      │
        │  OPTIMUM SOLUTION)        │
        └──────────────────────────┘
                      │
                      ▼
        ┌──────────────────────────┐
        │ GENERATE SIMULATION       │──S14
        │ INPUT DATA                │
        └──────────────────────────┘
                      │
                      ▼
        ┌──────────────────────────┐
        │   EXECUTE SIMULATION      │──S15
        └──────────────────────────┘
                      │
                      ▼
              S16
        ◇ DOES RESULT SATISFY      NO      ┌──────────────────────┐
          EVALUATION CRITERION? ─────────► │  UPDATE ISING MODEL  │──S17
        ◇                                  └──────────────────────┘
                      │ YES
                      ▼
        ┌──────────────────────────┐
        │  OUTPUT OPTIMUM SOLUTION  │──S18
        └──────────────────────────┘
                      │
                      ▼
                    END
```

# FIG. 11

# FIG. 12

```
        ( START SIMULATION )
                 │
                 ▼
┌─────────────────────────────────────┐
│ STORE WAITING TIME OR SPEED DECREASE │ ～ S20
│            INFORMATION               │
└─────────────────────────────────────┘
                 │
                 ▼          ⌇ S21
            ◇─────────────────────◇
           /  HAVE ALL LOADS BEEN   \   NO
           \ COMPLETELY TRANSPORTED? /─────┐
            ◇─────────────────────◇        │
                 │ YES                      │
                 ▼                          │
┌─────────────────────────────────────┐    │
│      OUTPUT SIMULATION RESULT        │ ～ S22  (loops back to S20)
└─────────────────────────────────────┘
                 │
                 ▼
        ( END OF SIMULATION )
```

# FIG. 13

WHEN $x_{10,2} = x_{15,3} = 1$

TRANSPORTING LOADS PLACED AT PIT WITH PIT NUMBER = 2 BY TRUCK 10

50a

FORKLIFT

FORKLIFT

50b

TRANSPORTING LOADS PLACED AT PIT WITH PIT NUMBER = 3 BY TRUCK 15 STOP FOR t SECONDS

# FIG. 14

WHEN $x_{11,4} = x_{16,5} = 1$

SHIPPING STAGING AREA

51b

FORKLIFT

51a

FORKLIFT

DROPPING LOADS PLACED AT PIT WITH PIT NUMBER = 4 BY TRUCK 11

TRANSPORTING LOADS PLACED AT PIT WITH PIT NUMBER = 5 BY TRUCK 16 STOP FOR ta SECONDS

# FIG. 15

FREQUENCY

0

SAMPLES WITH LARGE
INCREASED TIMES

INCREASED
TIME

Europäisches
Patentamt

European
Patent Office

Office européen
des brevets

# EUROPEAN SEARCH REPORT

Application Number

EP 20 17 4843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANAMARU SHO ET AL: "Efficient Ising Model Mapping to Solving Slot Placement Problem", 2019 IEEE INTERNATIONAL CONFERENCE ON CONSUMER ELECTRONICS (ICCE), IEEE, 11 January 2019 (2019-01-11), pages 1-6, XP033528076, DOI: 10.1109/ICCE.2019.8661947 [retrieved on 2019-03-06] * abstract; figures 1-3, 5 * * List 1; paragraph [000I] - paragraph [00VI] * | 1-12 | INV. G06N5/00 |
| A | STOLLENWERK TOBIAS ET AL: "Flight Gate Assignment with a Quantum Annealer", 19 February 2019 (2019-02-19), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 99 - 110, XP047505569, ISBN: 978-3-319-10403-4 [retrieved on 2019-02-19] * the whole document * | 1-12 | |
| A | JP 6 465231 B1 (FUJITSU LTD) 6 February 2019 (2019-02-06) * the whole document * | 1-12 | TECHNICAL FIELDS SEARCHED (IPC) G06N |
| A | US 2015/205759 A1 (ISRAEL ROBERT [CA] ET AL) 23 July 2015 (2015-07-23) * the whole document * | 1-12 | |

The present search report has been drawn up for all claims

| Place of search | Date of completion of the search | Examiner |
|---|---|---|
| The Hague | 30 October 2020 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 4843

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2020

| Patent document cited in search report | | Publication date | Patent family member(s) | Publication date |
|---|---|---|---|---|
| JP 6465231 | B1 | 06-02-2019 | JP 6465231 B1<br>JP 2019159637 A<br>US 2019278829 A1 | 06-02-2019<br>19-09-2019<br>12-09-2019 |
| US 2015205759 | A1 | 23-07-2015 | NONE | |

EPO FORM P0459

For more details about this annex : see Official Journal of the European Patent Office, No. 12/82

**REFERENCES CITED IN THE DESCRIPTION**

**Patent documents cited in the description**

- JP 2002269192 A

- JP 11199059 A